# EUROPEAN PATENT SPECIFICATION

(11) **EP 2 748 015 B1**
(45) Date of publication and mention of the grant of the patent: **29.03.2017**
(21) Application number: 12823044.8
(22) Date of filing: 21.12.2012
(51) Int. Cl.: B60C 9/00, D07B 1/00, D07B 1/06, B60C 9/22, B60C 9/20

(54) **TYRE FOR MOTORCYCLES**
REIFEN FÜR MOTORRÄDER
PNEU POUR MOTOCYCLES

(30) Priority: 27.12.2011 IT MI20112394; 30.12.2011 US 201161581912 P
(43) Date of publication of application: 02.07.2014
(73) Proprietor: Pirelli Tyre S.p.A., 20126 Milano (IT)
(72) Inventor: MISANI, Pierangelo, I-20126 Milano (IT); MARIANI, Mario, I-20126 Milano (IT); DAGHINI, Guido Luigi, I-20126 Milano (IT); TRESOLDI, Stefano, I-20126 Milano (IT); BALLABIO, Omar, I-20126 Milano (IT); AGRESTI, Simone, I-50063 Figline Valdarno (Firenze) (IT)
(74) Representative: Castiglia, Paolo
(86) International application number: PCT/IB2012/057593
(87) International publication number: WO 2013/098738

(56) References cited:
- EP-A1- 2 000 584
- DE-A1-102004 036 129
- JP-A- 6 297 905

## Description

The present invention relates to a tyre for motorcycles.

The tyre of the present invention preferably is a tyre for wheels of high performance motorcycles, i.e. motorcycles capable of reaching speeds even higher than 270 km/h. Such motorcycles are those belonging to the category typically identified with the following classifications: hypersport, supersport, sport touring, and for lower speed indexes: scooter, road Enduro and custom.

The following definitions apply in the present description.

The terms "tyre for motorcycles" and/or "tyre for motorcycle wheels" are used to indicate tyres having a high curvature ratio (typically higher than 0.200), capable of achieving high camber angles during the cornering of the motorcycle.

"Camber angle" is used to indicate the angle between the equatorial plane of the tyre mounted on the motorcycle wheel and a plane orthogonal to the road surface.

"Equatorial plane" of the tyre is used to indicate a plane which is perpendicular to the rotation axis of the tyre and which splits the tyre into two symmetrically equal parts.

"Curvature ratio" of the tyre is used to indicate the ratio between the distance comprised between the radially higher point of the tread band and the maximum tyre chord, and the same maximum tyre chord, in a cross section thereof. The curvature ratio also identifies the so-called "transverse curvature" of the tyre.

The terms "radial" and "axial" and the expressions "radially inner/outer" and "axially inner/outer" are used with reference to the radial direction and to the axial direction of the tyre. The terms "circumferential" and "circumferentially", on the other hand, are used with reference to the direction of the annular development of the tyre, which corresponds to a direction lying on a plane parallel to the equatorial plane of the tyre.

The term "elastomeric material" is used to indicate a composition comprising at least one elastomeric polymer and at least one reinforcement filler. Preferably, such composition further comprises additives such as, for example, a cross-linking agent and/or a plasticizer. Thanks to the presence of the cross-linking agent, such material may be cross-linked by heating.

The expression "reinforcing cord" is used to indicate an element consisting of one or more elongated elements incorporated in a matrix of elastomeric material. Depending on the cases and to the specific applications, the above elongated elements are made of a textile or metal material.

The expression "elongation at break" of a reinforcing cord is used to indicate the percentage elongation at which break occurs, as determined by the BISFA E6 method (The International Bureau For The Standardization Of Man-Made Fibres, Internationally Agreed Methods For Testing Steel Tyre Cords, 1995 edition).

The expression "part load elongation" of a reinforcing cord is used to indicate the difference between the percentage elongation obtained by subjecting the cord to a tensile strength of 50 N and the percentage elongation obtained by subjecting the cord to a tensile strength of 2.5 N. The part load elongation is determined by the BISFA E6 method (The International Bureau For The Standardization Of Man-Made Fibres, Internationally Agreed Methods For Testing Steel Tyre Cords, 1995 edition).

The expression "reinforced band-like element" is used to indicate an elongated composite having a cross-sectional profile with a flat shape and comprising one or more reinforcing cords extended parallel to the longitudinal development of the product and incorporated in, or at least partly coated by, at least one layer of elastomeric material. Such reinforced band-like element is also commonly called "strip-like element".

Tyres for motorcycle wheels have a high transverse curvature so as to provide an adequate contact surface with the road surface when the motorcycle is inclined to turn a bend.

In addition to bearing the motorcycle weight in all the running conditions (thus including the weight of the driver, any passengers and any loads), such tyres must ensure driving stability, controllability, directionality, comfort, road-holding, besides high mileage and regular wear.

High performance tyres, which are suitable for being mounted on large piston displacement (e.g. 1000 cm³ or higher) and/or high power (e.g. 170-180 HP or higher) motorcycles, must also provide an excellent adhesion to the road, so as to effectively discharge the high driving torque to the ground both when driving on straight roads and during accelerations when exiting a bend, as well as ensure an adequate response to the side forces on bends and an effective braking force.

The behaviour of tyres for motorcycles, especially on bends and in particular in the case of tyres for high performance motorcycles, highly depends on the particular type and shape of the belt structure. In fact, the belt structure is configured to transfer to the carcass structure the side and longitudinal stresses the tyre is subjected to because of the contact with the road surface, thus contributing to imparting the desired features of structural resistance, performance (i.e. adhesion, driving stability, controllability, directionality, road-holding) and comfort to the tyre.

The particular type and shape of the belt structure has a considerable impact on the weight and/or production cost of the tyre.

The use of belt structures of the so-called "crossed" type and belt structures of the so-called "zero degree" type is widespread in tyres for motorcycles.

Belt structures of the "crossed" type typically have two belt layers arranged radially one on top of the other. Each belt layer comprises a plurality of reinforcing cords arranged parallel to each other and made of a textile or metal material, more typically textile in tyres for motorcycles. The belt layers are reciprocally arranged so that the reinforcing cords of the first belt layer are tilted with respect to the equatorial plane of the tyre, whereas the reinforcing cords of the second layer are also tilted, but they are oriented on the opposite side with respect to the reinforcing cords of the first layer with reference to the equatorial plane of the tyre.

Belt structures of the "zero degree" type typically comprise a plurality of reinforcing cords made of a textile or metal material. Such reinforcing cords are wound on the carcass structure according to coils arranged next to one another in the axial direction and oriented substantially parallel to the equatorial plane of the tyre or tilted with respect to said equatorial plane by a very small angle.

EP 0 461 646 describes a tyre for motorcycles comprising a belt structure of the zero degree type formed starting from a plurality of high elongation reinforcing cords (also called "HE cords"). Each reinforcing cord comprises a plurality of strands twisted together, each strand in turn comprising a plurality of metal wires twisted together.

US 2003/0051788 describes a reinforcing cord comprising a core of polymeric material and four to six metal wires arranged parallel to each other and twisted around said core.

US 3,977,174 describes a reinforcing cord comprising a core of plastic material and a plurality of steel wires arranged around the core.

US 2009/0294009 describes a reinforcing cord comprising a core made of textile fibre entirely covered with a rubber sheath, and a plurality of metal wires helically wound around the above rubber sheath. Such cord is used for reinforcing the belt structure of a tyre.

DE-A-10 2004 036 129 discloses a reinforcing cord for elastomeric products, in particular for the belt bandage of motor-vehicle pneumatic tyres, consisting of a non-metallic cord-core which is helically wrapped around with at least one metallic filament.

The Applicant has been long manufacturing tyres for motorcycles with belt structure of the zero degree type as described in EP 0 461 646, i.e. comprising a plurality of high elongation metal cords (HE cords) formed starting from a plurality of metal strands twisted together, each strand in turn comprising a plurality of metal wires twisted together. Such tyres have excellent features of structural resistance (both at high speeds and to fatigue), performance (in terms of adhesion, driving stability, controllability, directionality, road-holding), conformability and comfort and are highly appreciated by customers.

However, the Applicant has found that if on the one hand a belt structure of the type described above allows the above requirements to be met, on the other hand it implies a complex and expensive construction of the cord that, among the other things, requires the use of a large number of metal wires, this affecting the weight and cost of the belt structure and therefore, of the tyre.

On the other hand, the Applicant has found that the use of a belt structure having a large weight can cause an undesired transmission of vibrations while running; this is due to the presence in the tyre of a large non suspended mass. The Applicant has also found that the use of a belt structure having a large weight may cause problems in terms of driving stability at high speeds; this is due to the high moment of inertia around the axis of rotation of the tyre produced by the mass of the belt structure which, by a gyroscopic effect, causes a transfer of forces to the motorcycle frame, to the disadvantage of the stability.

The Applicant has therefore considered the problem of manufacturing a belt structure of the zero degree type for tyres of motorcycles using cords which are easier and cheaper to manufacture and having a weight and number of metal wires as small as possible without impairing the desired features of structural resistance, performance (in terms of adhesion, driving stability, controllability, directionality, road-holding), conformability and comfort of the tyre.

The Applicant has found that such problem can be solved using, for the belt structure, cords of the zero degree type comprising a core made of non metal material, preferably a fibrous material (for example an organic material or an inorganic material comprising glass and/or carbon and/or basalt and/or boron fibres) and a plurality of metal wires substantially parallel to one another and helically wound around said core with a predetermined winding pitch. The metal wires preferably are in such a number and/or are wound with such a winding pitch as to not completely surround the core. They may be arranged around the core so that, in any cross-section of the cord, they are located at just an angular portion of an ideal circumference that circumscribes the core.

A reinforcing cord of the type described above, thanks to the use of a non metal material, has a weight smaller than that of the metal cords described above. A further weight reduction is also due to the use of a limited number of metal wires. Using low cost non metal materials, such as for example polyester, the reinforcing cord of the type described herein also has a lower cost compared to that of a HE metal cord.

Surprisingly, the Applicant has found that the use of a belt structure of the zero degree type comprising the cords described above allows the desired features of structural resistance (both at high speed and to fatigue), performance and comfort to be achieved.

The Applicant believed that the presence of a core made of a non metal material in the above reinforcing cords and the irregular distribution of the metal wires around said core could have created zones with a reduced structural resistance at those zones wherein the tyre components are exposed towards the non metal core of the cord and zones with a high structural resistance at those zones wherein the tyre components are exposed towards the metal wires of the cord. According to the Applicant, this could have caused a concentration of the stresses that essentially arise by the effect of the wheel-road contact forces at the zones having a high structural resistance and the arise of problems in terms of fatigue resistance, to be compensated by further technical solutions.

The Applicant further believed that the presence in the tyre of the above zones with a low structural resistance would have caused a reduced capability of transmission of the side and longitudinal forces while running, with a consequent decrease in the tyre speed performance both when driving on a straight road and in bends.

The Applicant has surprisingly found that the above problems of fatigue resistance and performance actually do not occur and, in addition, excellent results are achieved also in terms of conformability and comfort of the tyre.

Without being bound to any interpretation theory, according to the Applicant, the unexpected good behaviour at fatigue of the tyre might be ascribed to the fact that the winding of the metal wires on the non metal core in the cord defines a composite that, when subject to the stresses resulting from the wheel-road contact, appears as a homogeneous complex whose behaviour is substantially comparable to that of the metal material.

The Applicant further believes that the unexpected good behaviour of the tyre in terms of performance, conformability and comfort may be ascribed to the particular arrangement of the metal wires obtained thanks to the winding thereof on the core of non metal material, this arrangement defining within the belt structure of the zero degree type a plurality of microcells with a crossed weft which impart to the belt structure of the zero degree type predetermined advantageous features which are typical of a belt structure of the crossed type. In particular, each microcell is defined by a plurality of pieces of metal wires inclined on one side with respect to a direction parallel to the equatorial plane of the tyre (such pieces of metal wires being for example those seen by looking at a cord from above) and a plurality of other pieces of the same metal wires inclined on the opposite side with respect to the equatorial plane of the tyre (such other pieces being for example those seen by looking at the cord from below). Ultimately, according to what observed by the Applicant, a belt structure is obtained whose behaviour has stability, conformability and comfort features typical of a tyre with belt structure of the zero degree type and reactivity and readiness features typical of a tyre with belt structure of the crossed type.

The Applicant has ultimately found that using in the belt reinforcing cords as described above allows tyres for motorcycles to be obtained which have optimal features in terms of structural resistance, performance, comfort, conformability, weight and manufacturing cost.

The present invention relates to a tyre for motorcycles according to claim 1.

Preferably, said metal wires are in such a number as to not completely surround the core.

Preferably, said metal wires are arranged around said core so that, in any cross-section of the cord, they are located at just an angular portion of an ideal circumference that circumscribes the core.

Preferably, said angular portion is defined by an angle smaller than about 270°, more preferably smaller than about 190°.

Preferably, said angular portion is defined by an angle greater than about 40°, more preferably greater than about 130°.

In preferred embodiments of the invention, said angular portion is defined by an angle comprised between about 40° and about 270°, more preferably between about 130° and about 190°.

For example, said angle is equal to about 150°.

Preferably, the diameter of said core, the diameter of said metal wires and the winding pitch of said metal wires are selected so that the metal wires are inclined with respect to said substantially circumferential direction by an angle greater than about 10°, more preferably greater than about 15°.

Preferably, the diameter of said core, the diameter of said metal wires and the winding pitch of said metal wires are selected so that the metal wires are inclined with respect to said substantially circumferential direction by an angle smaller than about 40°, more preferably smaller than about 30°.

In preferred embodiments of the tyre of the present invention, the diameter of said core, the diameter of said metal wires and the winding pitch of said metal wires are selected so that the metal wires are inclined with respect to said substantially circumferential direction by an angle comprised between about 10° and about 40°, more preferably between about 15° and about 30°.

Preferably, the number of said metal wires is greater than two, more preferably greater than three.

Preferably, the number of said metal wires is smaller than eight, more preferably smaller than seven.

In preferred embodiments of the present invention, the number of said metal wires is comprised between two and eight, preferably between three and seven.

For example, the number of said metal wires is equal to five.

Preferably, the diameter of said metal wires is greater than about 0.12 mm, more preferably greater than about 0.17 mm.

Preferably, the diameter of said metal wires is smaller than about 0.35 mm, more preferably smaller than about 0.28 mm.

In preferred embodiments of the present invention, the diameter of said metal wires is comprised between about 0.12 mm and about 0.35 mm, more preferably between about 0.17 mm and about 0.28 mm.

For example, in a first embodiment, the diameter of said metal wires is equal to about 0.22 mm and in a second embodiment equal to about 0.25 mm.

Preferably, said metal wires are in a condition of substantially mutual contact.

Preferably, said at least one reinforcing cord has a diameter greater than about 0.5 mm, more preferably greater than about 0.8 mm.

Preferably, said at least one cord has a diameter smaller than about 2.5 mm, more preferably smaller than about 1.5 mm.

In preferred embodiments of the invention, said at least one reinforcing cord has a diameter comprised between about 0.5 mm and about 2.5 mm, more preferably between about 0.8 mm and about 1.5 mm.

For example, in a first embodiment thereof said at least one reinforcing cord has a diameter equal to about 0.95 mm and in a second embodiment thereof equal to about 0.99 mm.

Preferably, said winding pitch is greater than about 3 mm, more preferably greater than about 5 mm.

Preferably, said winding pitch is smaller than about 16 mm, more preferably smaller than about 12.5 mm.

In preferred embodiments of the invention, the above winding pitch is comprised between about 3 mm and about 16 mm, more preferably between about 5 mm and about 12.5 mm.

For example, in an embodiment of the reinforcing cord, the above winding pitch is equal to about 6.3 mm and in a second embodiment of the reinforcing cord it is equal to about 10 mm.

In the preferred embodiments of the present invention, said at least one reinforcing cord has an elongation at break greater than 2.5%.

Preferably, said at least one reinforcing cord has a part load elongation greater than 0.5%, more preferably greater than 0.9%.

In an embodiment of the present invention, the core is defined by a single twisted elongated element.

Said elongated element may for example be a textile thread.

In an alternative embodiment of the present invention, the core is defined by two elongated elements twisted on each other.

Preferably, said non metal material may comprise a fibrous material. Such fibrous material may be an organic material or an inorganic material.

Preferably, said organic material is selected among: polyethylene terephthalate, polyamide, aromatic polyamide, polyvinyl ester, polyvinyl alcohol, polyethylene naphthalate, polyketone, cotton, yarns from regenerated cellulose (such as rayon or lyocell) and hybrids or mixtures thereof.

In preferred embodiments of the present invention, said organic material comprises polyethylene terephthalate.

Preferably, said inorganic material is selected among: glass, carbon, basalt, boron and/or combinations thereof.

Further features and advantages of the tyre of the present invention will appear more clearly from the following detailed description of preferred embodiments thereof, made with reference to the attached drawings. In such drawings:
- figure 1 is a perspective partly cutaway view of a portion of a tyre according to the present invention;
- figure 2 is a perspective view of a reinforcing cord used in the tyre of figure 1;
- figure 3 is an enlarged view of a cross section of the reinforcing cord of figure 2;
- figure 4 is a plan view of a portion of a belt structure of the tyre of figure 1;
- figure: 5 is a load-elongation diagram of two embodiments of the reinforcing cord of figure 2 and of a reinforcing cord used in a known tyre manufactured by the Applicant.

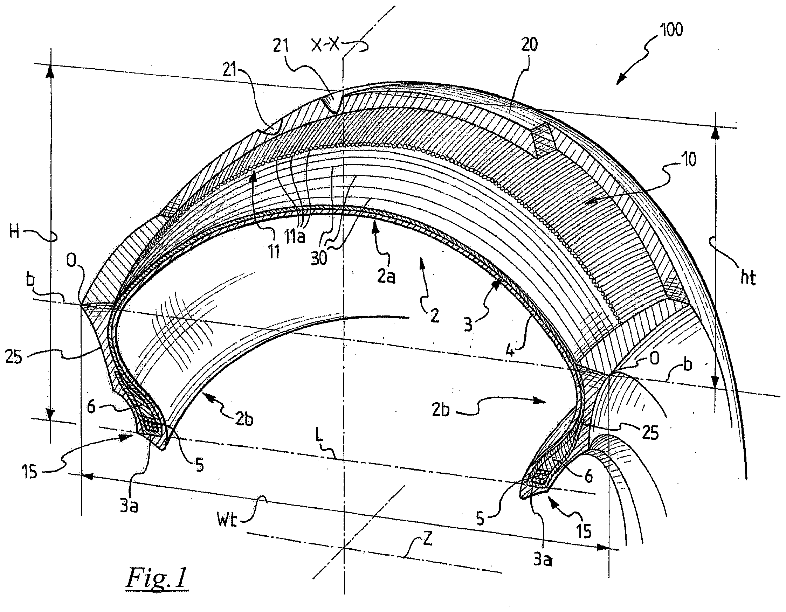

In figure 1, reference numeral 100 is used to globally indicate a tyre for motorcycles according to the present invention. In particular, the tyre 100 is intended to be used preferably on a front or rear wheel of a large piston-displacement (e.g. 1000 cm³ or higher) and/or high power (e.g. 170-180 HP or higher) motorcycle.

In the tyre 100 an equatorial plane X-X and an axis of rotation Z perpendicular to the equatorial plane X-X are defined. Moreover, an axial (or transverse, or side) direction parallel to the axis of rotation Z and a circumferential (or longitudinal) direction parallel to the equatorial plane X-X and corresponding to the rolling direction of tyre 100 are defined.

Tyre 100 comprises a carcass structure 2 comprising at least one carcass ply and having, in an axial section thereof, a substantially toroidal shape.

The carcass structure 2 comprises a crown portion 2a symmetrically arranged with respect to the equatorial plane X-X and opposite side portions 2b arranged on axially opposite sides with respect to the rim portion 2a.

The carcass structure 2 herein shown comprises a carcass ply 3 extending axially from a side portion 2b of the carcass structure 2 to the opposite side portion 2b.

The carcass ply 3 is preferably coated, on the radially inner wall, with a sealing layer 4, or so-called "liner", essentially consisting of a layer of airtight elastomeric material adapted to ensure the seal of the tyre 100 once inflated.

The carcass ply 3 is engaged, at the respective axially opposite side edges 3a, with respective annular reinforcing structures 5, typically called "bead cores".

Each side edge 3a of the carcass ply 3 is turned around a respective bead core 5.

A tapered elastomeric filler 6 is applied on the outer perimeter edge of the bead cores 5. The filler 6 occupies : the space defined between the carcass ply 3 and the respective turned side edge 3a.

In an alternative embodiment which is not shown, the carcass ply has its opposite side edges associated, without being turned thereon, with particular annular reinforcing structures provided with two metal annular inserts. In this case, a filler of elastomeric material may be arranged in an axially outer position with respect to the first annular insert. The second annular insert is arranged in an axially outer position with respect to the carcass ply end. Finally, a further filler, which completes the manufacturing of the annular reinforcing structure, may be provided in an axially outer position with respect to said second annular insert and not necessarily in contact therewith.

The zone of the tyre comprising the bead core 5 and the elastomeric filler 6 forms the so-called "bead", which is globally indicated in figure 1 with reference numeral 15. The bead 15 is configured to allow anchoring of the tyre on a corresponding mounting rim, not shown, by means of an elastically forced fitting.

A belt structure 10, which is described hereinafter in more detail, is provided in a radially outer position with respect to said carcass structure 2, at at least one axial portion of the crown portion 2a.

A tread band 20 is applied in a radially outer position with respect to the belt structure 10. Through the tread band 20 the tyre 100 contacts the road surface.

The tread band 20 typically has a tread pattern defined by a plurality of grooves 21 which are variously located in the different zones of the tyre. For clarity of illustration, only some of the grooves 21 of tyre 100 are shown and/or visible in figure 1.

At each of the opposite side portions 2b of the carcass structure 2 tyre 100 may further comprise a respective sidewall 25 which extends from the tread band 20 to the bead 15 of tyre 100.

Tyre 100 of the present invention is characterised by a high transverse curvature (and thus by a high curvature ratio) and preferably lowered sidewalls.

With reference to figure 1, the curvature ratio of tyre 100 is defined by the value of the ratio between distance ht of the ridge of the tread band 20 from line b-b passing by the ends of the tread band 20, measured on the equatorial plane X-X, and distance wt between said ends of the tread band 20. If the ends of the tread band cannot be easily identified, for example due to the lack of a precise reference such as for example the edge indicated in figure 1 with O, the measure of the maximum tyre chord may certainly be assumed as distance wt.

Preferably, the curvature ratio is greater than or equal to 0.2, more preferably greater than or equal to 0.25. If tyre 100 is intended to be mounted on a front wheel, the curvature ratio may also be greater than 0.30. Such curvature ratio is typically smaller than or equal to 0.8, more preferably smaller than or equal to 0.5.

Tyre 100 of the present invention preferably is a tyre with particularly low sidewalls.

With reference to figure 1, by tyre with low or lowered sidewalls it is meant in the present description a tyre wherein the ratio between distance H-ht and height H, measured on the equatorial plane X-X between the radially highest point of the tread band 20 and the fitting diameter, substantially identified by the reference line L passing by the beads 15 of the tyre, is preferably smaller than 0.6, more preferably smaller than 0.5.

The carcass ply 3 of the carcass structure 2 is preferably made of an elastomeric material and comprises a plurality of reinforcing elements 30 arranged substantially parallel to one another. For clarity of illustration, reference numeral 30 in figure 1 is associated to only some of the reinforcing elements described.

The reinforcing elements 30 preferably comprise textile cords selected among those usually adopted in the manufacturing of tyre carcasses, for example among nylon, rayon, PET, PEN, Lyocell, aramid.

The reinforcing elements 30 are preferably arranged in a substantially radial direction, i.e. according to an angle (measured at the top of tyre 100) comprised between 65° and 110°, more preferably between 80° and 100°, with respect to the equatorial plane X-X.

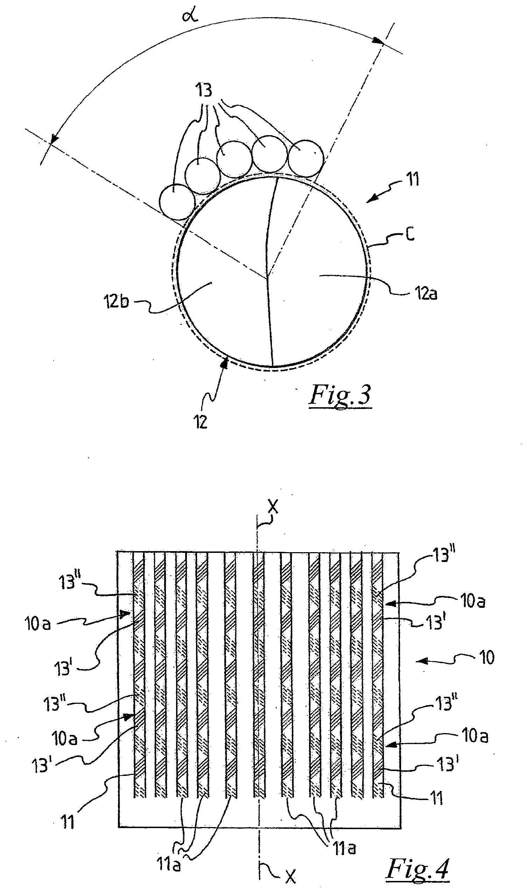

With reference to figures 1 and 4, the belt structure 10 of tyre 100 of the present invention is of the zero degree type. It is formed by winding on the crown portion 2a of the carcass structure 2 a single reinforcing cord 11 or a reinforced band-like element of rubber fabric comprising a plurality of cords 11 arranged side by side in the axial direction, to form a plurality of coils 11a substantially oriented according to the circumferential direction of tyre 100 (typically with an angle comprised between 0° and 5° with respect to the equatorial plane X-X). If a reinforced band-like element is used, it may comprise up to five cords 11, more preferably two or three or four cords 11.

For clarity of illustration, reference numeral 11a in figure 1 is associated to only some of the coils shown and reference numeral 11 is associated to only some of the pieces of cord 11 shown.

Preferably, the winding defined by the coils 11a axially extends on the whole crown portion 2a with a winding pitch which may be constant or variable in the axial direction.

The belt structure 10 may also comprise one or more support layers of elastomeric material (not shown) interposed between the layer of cords 11 and the carcass ply 3 and whereon coils 11a are wound. Such layer(s) may extend on a surface having an axial extension substantially corresponding to the surface whereon coils 11a develop.

In a preferred embodiment of tyre 100 of the present invention, a support layer is used which comprises short aramidic fibres, for example made of Kevlar^{®}, dispersed into an elastomeric material.

In a further embodiment which is not shown, in the tyre 100 may be used, in addition or in alternative to the support layer described above, at least one layer reinforced with textile cords (fully similar to the cords usable in the carcass structure 2) which are oriented substantially radially (for example with an angle between 65° and 110° with respect to the equatorial plane X-X of the tyre). Such layer axially extends at least on the crown portion 2a of the carcass structure 2, or even on a larger portion, but without being turned around the bead cores 5.

In a preferred embodiment of tyre 100 of the present invention, an additional layer (not shown) of elastomeric material is arranged between the belt structure 10 and the tread band 20. Preferably, such additional layer axially extends on the crown portion 2a of the carcass structure 2. As an alternative, the above additional layer may axially extend on a surface smaller than the axial development surface of the belt structure 10, for example only on axially opposite side portions of the belt structure 10.

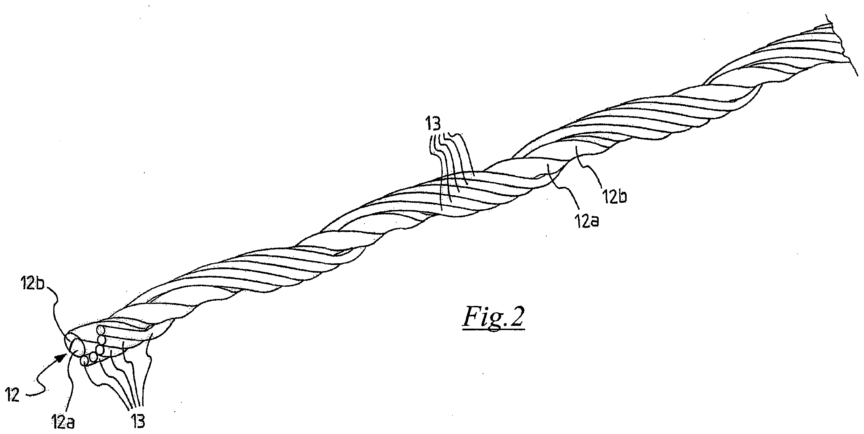

As shown in figures 2 and 3, cord 11 used in the belt structure 10 of tyre 100 of the present invention comprises a core 12 made of non metal material and a plurality of parallel metal wires 13 helically wound around the core 12 with a predetermined winding pitch.

Core 12 comprises at least one elongated element.

Preferably, core 12 is made of an organic material. However, alternative embodiments of tyre 100 of the present invention are foreseen wherein core 12 is made of an inorganic material, for example a material comprising glass, carbon, basalt, boron fibres.

Irrespective of the specific type of material used for manufacturing the core 12, such material is suitably superficially coated with adhesive so as to provide a suitable adhesion to the surrounding mixture. Typically, the adhesive coating may be carried out by immersion of the elongated element forming the core 12 of cord 11 in a solution comprising the adhesive.

Preferably, cord 11 has a diameter comprised between about 0.5 mm and about 2.5 mm, more preferably between about 0.8 mm and about 1.5 mm.

For example, in a first embodiment thereof, cord 11 has a diameter equal to 0.95 mm and in a second embodiment thereof, it has a diameter equal to 0.99 mm.

Preferably, cord 11 has a part load elongation greater than 0.5%, more preferably greater than 0.9%.

Example of organic materials by which core 12 may be made are: polyethylene terephthalate, polyamide, aromatic polyamide, polyvinyl ester, polyvinyl alcohol, polyethylene naphthalate, polyketone, yarns from regenerated cellulose (such as rayon or lyocell), cotton and hybrids or mixtures thereof.

In an embodiment of the present invention, said organic material comprises polyethylene terephthalate.

In the example illustrated herein and with particular reference to figures 2 and 3, core 12 is defined by two elongated elements 12a, 12b twisted on each other with a predetermined twisting pitch. As an alternative, core 12 may be defined by a single elongated element twisted on itself with a predetermined twisting pitch, or by more than two elongated elements twisted on each other with the same twisting pitch.

The elongated elements 12a, 12b are preferably defined by respective textile elongated elements (or wires).

In the embodiment shown herein, the metal wires 13 are in direct contact with core 12, i.e. no intermediate layer is provided between core 12 and the metal wires 13. In particular, no coating layer of core 12 is provided.

In the example of figure 2 and 3, the metal wires 13 are five and they are in a condition of mutual contact. However, alternative embodiments are foreseen wherein the number of metal wires 13 is comprised between two and eight, more preferably between three and seven, the above metal wires 13 also being not all in mutual contact.

The diameter of the metal wires 13 is preferably comprised between about 0.12 mm and about 0.35 mm, more preferably between about 0.17 mm and about 0.28 mm.

For example, in a first embodiment of cord 11, the diameter of the metal wires 13 is equal to about 0.22 mm and in a second embodiment of cord 11, it is equal to about 25 mm.

In any case, the metal wires 13 are arranged so as to not completely surround core 12. In particular, as shown in figure 3, the metal wires 13 are arranged around core 12 so that, in any cross-section of cord 11, they are located at just an angular portion of an ideal circumference (indicated with letter C and a dashed line in figure 3) that circumscribes core 12. Such angular portion is defined by an angle α which is preferably comprised between about 40° and about 270°, more preferably between about 130° and about 190°, for example equal to about 150°.

Preferably, the winding pitch of the metal wires 13 is comprised between about 3 mm and about 16 mm, more preferably between about 5 mm and about 12.5 mm.

For example, in a first embodiment of cord 11, the above winding pitch is equal to about 6.3 mm and in a second embodiment of cord 11, it is equal to about 10 mm.

Cord 11 has an elongation at break greater than 2.5 %.

The metal wires 13 are preferably all made of the same material.

In a preferred embodiment of the present invention, such material is steel, more preferably NT (Normal Tensile), HT (High Tensile), SHT (Super High Tensile) or UHT (Ultra High Tensile) steel. Typically, such steel has a carbon content smaller than about 1%. Preferably, the carbon content is greater than or equal to about 0.7%. Typically, the steel has a tensile strength greater than about 2600 MPa. Typically, such tensile strength is smaller than about 4500 MPa.

With particular reference to figure 4, the particular arrangement of the metal wires 13 in the above cord 11 allows a crossed weft structure comprising a plurality of microcells 10a to be defined in the belt structure 10 of the zero degree type of tyre 100 of the present invention.

For clarity of illustration, reference numeral 10a in figure 4 is associated to only some of the microcells shown. :

Each of such microcells 10a is defined by pieces 13' of a respective metal wire 13. inclined on one side with respect to a direction parallel to the equatorial plane X-X of tyre 100 and visible when looking at cord 11 from above, and by pieces 13" of the same metal wire 13 inclined on the opposite side with respect to the equatorial plane X-X of tyre 100 and visible when looking at cord 11 from below.

According to the Applicant, respective thrust microcomponents are generated at said pieces 13', 13" of metal wires 13 of each of the above microcells 10a which effectively oppose the side stresses generated while running, in particular while running on bends.

Preferably, the diameter of core 12, the diameter of metal wires 13 and the winding pitch of metal wires 13 are selected so that pieces 13', 13'' are inclined with respect to a direction substantially parallel to the equatorial plane X-X of tyre 100 (which corresponds to the above substantially circumferential direction) by an angle comprised between 10° and 40°, more preferably between 15° and 30°.

The Applicant has compared the load-elongation behaviour of a cord 11 usable in the belt structure of the zero degree type of tyre 100 of the present invention with that of a HE cord used in the belt structure of the zero degree type of a tyre that has been long manufactured and sold by the same Applicant and is appreciated by customers for its excellent features of structural resistance, performance (in terms of adhesion, driving stability, controllability, directionality, road-holding) and comfort.

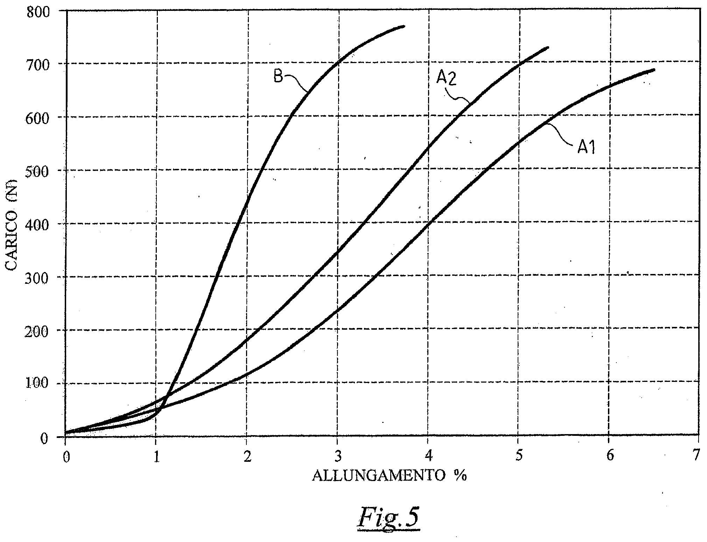

Curves A1 and A2 of figure 5 show the load-elongation diagram of two different embodiments of cord 11 described above. In particular, they are cords each comprising five metal wires helically wound on a core of textile material with a predetermined winding pitch. In particular, the metal wires are made of HT steel and have each a diameter equal to 0.22 mm. The textile core comprises two elongated elements of polyethylene terephthalate (polyester 1670x2 dtex), twisted with 330 twists/metre, in turn twisted with each other with 330 twists/metre.

Such cords have the features indicated in tables 1 and 2 below.

**TABLE 1**

| | Winding pitch (mm) | Twisting direction | Winding direction | Cord diameter (mm) |
|---|---|---|---|---|
| A1 | 6.3 | Leftwards | Leftwards | 0.95 |
| A2 | 10 | Leftwards | Leftwards | 0.95 |

**TABLE 2**

| | Linear density (g/m) | Stiffness (TSU taber Stiffness unit - BISFA E8) | Breaking load (N) | Elongation at break (%) | Part load elongation (%) |
|---|---|---|---|---|---|
| A1 | 2.0 | 26.3 | 687 | 6.4 | 1.36 |
| A2 | 1.9 | 25.7 | 721 | 5.1 | 1.17 |

On the other hand, curve B of figure 5 shows the load-elongation diagram of the comparison HE cord. In particular, it is a high carbon content cord, hereinafter referred to as cord B. This cord has a diameter of 0.95 mm and comprises nine HT steel wires divided into three strands. The three strands are twisted together, each strand in turn comprising three metal wires twisted together. Cord B has the features indicated in tables 3 and 4 below.

**TABLE 3**

| | Strand twisting pitch (mm) | Metal wire twisting pitch (mm) | Twisting direction | Diameter (mm) |
|---|---|---|---|---|
| B | 3.2 | 6.3 | Leftwards | 0.95 |

**TABLE 4**

| | Linear density (g/m) | Stiffness (TSU taber Stiffness unit - BISFA E8) | Breaking load (N) | Elongation at break (%) | Part load elongation (%) |
|---|---|---|---|---|---|
| B | 2.4 | 28.6 | 758 | 3.7 | 1.02 |

Figure 5 shows that cords A1, A2 and B have an increasing stiffness as the load increases (in fact, it is noted that the slope of the curves for elongations smaller than 1% is lower than that for elongations for example of about 3%). According to the Applicant, such increase in the stiffness is due to the fact that the resistance exerted by the textile core to the compression action exerted by the metal wires on the textile core increases as the load increases.

Figure 5 also shows that at high loads, cord B has a modulus higher than that of cords A1, A2. According to the Applicant, this could have led to two conflicting results. On the one hand, the lower modulus could have led cords A1, A2 to respond with less reactivity and longer delay to the (longitudinal and side) stresses generated while running. However, on the other hand, the lower modulus of cords A1, A2 could have led to a better footprint shape, to the advantage of stability.

On the contrary, the Applicant has surprisingly noticed an optimal response of tyre 100 of the present invention to the above stresses.

In order to assess the behaviour of tyre 100 of the present invention in terms of performance (adhesion, driving stability, controllability, directionality, road-holding), conformability (energy absorption upon impact) and comfort, the Applicant has carried out a number of comparative on-road tests using tyres comprising a belt structure of the zero degree type including a cord A1, A2 described above (such tyres thus corresponding to tyre 100 of the present invention) and known tyres comprising a belt structure of the zero degree type including cord B described above (hereinafter tyres B' or "comparison").

Tyres 100 and B' were mounted on the rear wheel of a Honda Hornet 600. On the contrary, tyres with belt structures of the zero degree type comprising cords B were mounted on the front wheel.

The rear tyre had a size 180/55 R17 and therefore they only differed in the different type of cord used in the respective belt structures. The front tyre had a size 120/70 R17 and the same structure.

The tester gave a very good overall assessment regarding the behaviour of tyre 100 of the present invention.

In particular, the tests carried out by the tester shown that tyre 100 of the present invention has an overall behaviour that is comparable with that of the already excellent comparison tyre chosen.

More in particular, the tester gave an opinion substantially identical to that given for the comparison tyre in terms of control (cold and hot skid), conformability (bump absorption and kick back absorption), comfort, solidity under fooprint and general driveability.

The tester even found better results than the comparison tyre in terms of steering control in acceleration, stability at high speeds and on bends, oscillations after manoeuvre and oscillation dampening. These results are surprising and unexpected due to the fact that the tyres of the invention use a belt structure with cords having a lower modulus than the cords used in the belt structure of the comparison tyre. Therefore, one would have expected a worsening of the features related to the behaviour at high speeds, in particular when approaching and exiting a bend (high speed braking, response in acceleration after exiting a bend) and in general in the control of oscillations.

The Applicant believes that such unexpected results may be ascribed to the fact that the particular arrangement of the metal wires 13 around core 12 of cord 11, defining the metal structure with crossed weft described above, makes tyre 100 of the present invention have, in addition to a behaviour typical of a tyre with a belt structure of the zero degree type, also a behaviour typical of a tyre with a belt structure of the crossed type.

In other words, in addition to the advantageous features in terms of general driveability, evenness, conformability and comfort typical of tyres with belt structure of the zero degree type, tyre 100 of the present invention also has the advantageous features in terms of reactivity, response readiness and oscillation control typical of tyres with belt structure of the crossed type. According to the Applicant, this may be ascribed to the presence of the above metal structure with crossed weft in the belt structure of the zero degree type of tyre 100 of the present invention, which not only makes up for the reduced resistance to stresses of the core of non metal material (which per se would have been a drawback), but it even imparts technical features to the belt structure of the zero degree type which can typically be more easily reached by tyres with belt structure of the crossed type.

In general, the use of a belt structure of the zero degree typer is advantageous since it does not introduce evenness problems on the tyre, allows a better braking on straight roads and causes on the motorcycle less vibrations and reactions to depressions and recesses, with a consequent benefit on the motorcycle stability while running.

On the other hand, the use of a belt structure of the crossed type may be advantageous if it is desired for the tyre to have a higher drift stiffness and a shorter relaxation length, i.e. a shorter delay in the response to the stresses resulting from the wheel-road contact. Although such features may also be obtained with tyres having a well optimized belt structure of the zero degree type, they may be reached more easily using a belt structure of the crossed type.

The use of a belt structure of the crossed type, however, may cause unevenness in the tyre and/or cause a stronger transferring of the side forces to the frame while running, as well as more sensitivity to depressions and recesses (and thus excessive reactivity), and/or more sensitivity to skids or vibrations induced by unevenness or by the tyre interaction with the rolling surface.

The results of the tests carried out by the Applicant confirm that with tyre 100 of the present invention, thanks to the particular geometry and structure of the belt structure 10 used, the Applicant has found how to combine in the same product features of driveability, conformability and comfort typical of a tyre with belt structure of the zero degree type and reactivity and readiness features typical of a tyre with belt structure of the crossed type.

Advantageously, this result was obtained also achieving a significant reduction in weight, thanks to the possibility of using, for the belt cords, a smaller number of metal wires than that of the HE cords typically used, and a core made of a light material. Among the other things, this has the advantage of providing a smaller non suspended mass in the tyre and thus of generating a lower moment of inertia around the axis of rotation of the tyre, so as to reduce the transfer of forces to the motorcycle frame, to the further advantage of stability.

The present invention has been described with reference to some preferred embodiments. Several changes may be made to the embodiments described above without departing from the scope of protection of the invention defined by the following claims.

## Claims

1. Tyre (100) for motorcycles, comprising:
- a carcass structure (2);
- a belt structure (10) arranged in a radially outer position with respect to the carcass structure (2);
- a tread band (20) arranged in a radially outer position with respect to the belt structure (10);
wherein said belt structure (10) comprises at least one reinforcing cord (11) wound on said carcass structure (2) according to adjacent coils (11a) oriented along a substantially circumferential direction;
wherein said at least one reinforcing cord (11) comprises:
- a core (12) made of non metal material, and
- a plurality of metal wires (13) substantially parallel to one another and helically wound around said core (12) with a predetermined winding pitch;
wherein said metal wires (13) are arranged around said core (12) so that, in any cross-section of the reinforcing cord (11), they are located at just an angular portion of an ideal circumference (C) that circumscribes the core (12); wherein said core (12) comprises at least two elongated elements (12a, 12b) twisted on one another or a single elongated element twisted on itself;
wherein said tyre has a curvature ration higher than 0.200.

2. Tyre (100) according to claim 1, wherein said angular portion is defined by an angle comprised between about 40° and about 270°.

3. Tyre according to claim 1 or 2, wherein the diameter of said core (12), the diameter of said metal wires (13) and the winding pitch of said metal wires (13) are selected so that the metal wires (13) are inclined with respect to said substantially circumferential direction by an angle comprised between 10° and 40°.

4. Tyre (100) according to any one of the previous claims, wherein the number of said metal wires (13) is comprised between two and eight.

5. Tyre (100) according to any one of the previous claims, wherein the number of said metal wires (13) is equal to five.

6. Tyre (100) according to any one of the previous claims, wherein the diameter of said metal wires (13) is comprised between about 0.12 mm and about 0.35 mm.

7. Tyre (100) according to any one of the previous claims, wherein said metal wires (13) are in a condition of substantially mutual contact.

8. Tyre (100) according to any one of the previous claims, wherein said at least one reinforcing cord (11) has a diameter comprised between about 0.5 mm and about 2.5 mm.

9. Tyre (100) according to any one of the previous claims, wherein said winding pitch is comprised between about 3 mm and about 16 mm.

10. Tyre (100) according to any one of the previous claims, wherein said at least one reinforcing cord (11) has an elongation at break greater than 2.5%.

11. Tyre (100) according to any one of the previous claims, wherein said at least one reinforcing cord (11) has part load elongation greater than 0.5%.

12. Tyre (100) according to any of the previous claims, wherein said core (12) comprises a fibrous material.

13. Tyre (100) according to claim 12, wherein said fibrous material comprises an inorganic material selected among glass and/or carbon and/or basalt and/or boron fibres.

14. Tyre (100) according to claim 12, wherein said fibrous material comprises an organic material selected among: polyethylene terephthalate, polyamide, aromatic polyamide, polyvinyl ester, polyvinyl alcohol, polyethylene naphthalate, polyketone, yarns from regenerated cellulose, cotton and hybrids or mixtures thereof.

## Patentansprüche

1. Reifen (100) für Motorräder, umfassend:
- eine Karkassenstruktur (2);
- eine Gürtelstruktur (10), die in Bezug auf die Karkassenstruktur (2) in einer radial äußeren Position angeordnet ist;
- einen Laufflächenring (20), der in Bezug auf die Gürtelstruktur (10) in einer radial äußeren Position angeordnet ist;
wobei die Gürtelstruktur (10) zumindest einen Verstärkungskord (11) umfasst, der auf die Karkassenstruktur (2) in Übereinstimmung mit benachbarten Wicklungen (11a) gewickelt wird, die im Wesentlichen entlang einer Umfangsrichtung orientiert sind;
wobei der zumindest eine Verstärkungskord (11) umfasst:
- einen Kern (12) aus nichtmetallischem Material, und
- einer Vielzahl von Metalldrähten (13) im Wesentlichen parallel zueinander und schraubenförmig um den Kern (12) mit einem vorbestimmten Wickelschritt gewickelt; wobei die Metalldrähte (13) um den Kern (12) so angeordnet sind, dass sie sich in jedem Querschnitt des Verstärkungskords (11) genau an einem Winkelabschnitt eines idealen Umfangs (C) befinden, der den Kern (12) umschreibt;
wobei der Kern (12) zumindest zwei längliche Elemente (12a, 12b) umfasst, die miteinander verdrillt sind, oder ein einzelnes längliches Element, das in sich selbst verdrillt ist;
wobei der Reifen ein Krümmungsverhältnis größer als 0,200 aufweist.

2. Reifen (100) nach Anspruch 1, wobei der Winkelabschnitt durch einen Winkel definiert wird, der zwischen etwa 40° und etwa 270° beträgt.

3. Reifen nach Anspruch 1 oder 2, wobei der Durchmesser des Kerns (12), der Durchmesser der Metalldrähte (13) und der Wickelschritt der Metallwicklungen (13) so ausgewählt sind, dass die Metalldrähte (13) in Bezug auf die wesentliche Umfangsrichtung mit einem Winkel von zwischen 10° und 40° geneigt sind.

4. Reifen (100) nach einem der vorhergehenden Ansprüche, wobei die Anzahl der Metalldrähte (13) zwischen zwei und acht beträgt.

5. Reifen (100) nach einem der vorhergehenden Ansprüche, wobei die Anzahl der Metalldrähte (13) gleich fünf ist.

6. Reifen (100) nach einem der vorhergehenden Ansprüche, wobei der Durchmesser der Metalldrähte (13) zwischen etwa 0,12 mm und etwa 0,35 beträgt.

7. Reifen (100) nach einem der vorhergehenden Ansprüche, wobei die Metalldrähte (13) im Wesentlichen in einem Zustand wechselseitigen Kontakts stehen.

8. Reifen (100) nach einem der vorhergehenden Ansprüche, wobei der zumindest eine Verstärkungskord (11) einen Durchmesser aufweist, der zwischen etwa 0,5 mm und etwa 2,5 mm beträgt.

9. Reifen (100) nach einem der vorhergehenden Ansprüche, wobei der Wickelschritt zwischen etwa 3 mm und etwa 16 mm beträgt.

10. Reifen (100) nach einem der vorhergehenden Ansprüche, wobei der zumindest eine Verstärkungskord (11) eine Bruchdehnung von mehr als 2,5 % aufweist.

11. Reifen (100) nach einem der vorhergehenden Ansprüche, wobei der zumindest eine Verstärkungskord (11) eine Teillastdehnung von mehr als 0,5 % aufweist.

12. Reifen nach einem der vorhergehenden Ansprüche, wobei der Kern (12) ein Fasermaterial umfasst.

13. Reifen (100) nach Anspruch 12, wobei das Fasermaterial ein anorganisches Material umfasst, das ausgewählt ist aus Glas und/oder Kohlenstoff und/oder Basalt und/oder Borfasern.

14. Reifen (100) nach Anspruch 12, wobei das Fasermaterial ein organisches Material umfasst, das ausgewählt ist aus: Polyethylenterephthalat, Polyamid, aromatisches Polyamid, Polyvinylester, Polyvinylalkohol, Polyethylennaphthalat, Polyketon, Garne aus regenerierter Zellulose, Baumwolle und Hybride oder Mischungen davon.

## Revendications

1. Pneu (100) pour motocycles, comprenant :
- une structure de carcasse (2) ;
- une structure de ceinture (10) agencée dans une position radialement externe par rapport à la structure de carcasse (2) ;
- une bande de roulement (20) agencée dans une position radialement externe par rapport à la structure de ceinture (10) ;
où ladite structure de ceinture (10) comprend au moins un câblé de renforcement (11) enroulé sur ladite structure de carcasse (2) selon des bobines adjacentes (11a) orientées le long d'une direction essentiellement circonférentielle ;
où ledit au moins un câblé de renforcement (11) comprend :
- un noyau (12) réalisé en un matériau non métallique, et
- une pluralité de fils métalliques (13) essentiellement parallèles les uns aux autres et enroulés de manière hélicoïdale autour dudit noyau (12) avec un pas d'enroulement prédéterminé ;
où lesdits fils métalliques (13) sont agencés autour dudit noyau (12) de sorte qu'ils soient situés, dans une coupe transversale quelconque du câblé de renforcement (11), à seulement une partie angulaire d'une circonférence idéale (C) qui entoure le noyau (12) ;
où ledit noyau (12) comprend au moins deux éléments allongés (12a, 12b) torsadés l'un sur l'autre ou un seul élément allongé torsadé sur lui-même ;
où ledit pneu présente un rapport de courbure supérieur à 0,200.

2. Pneu (100) selon la revendication 1, dans lequel ladite partie angulaire est définie par un angle compris entre environ 40° et environ 270°.

3. Pneu selon la revendication 1 ou 2, dans lequel le diamètre dudit noyau (12), le diamètre desdits fils métalliques (13) et le pas d'enroulement desdits fils métalliques (13) sont choisis de sorte que les fils métalliques (13) soient inclinés par rapport à ladite direction essentiellement circonférentielle d'un angle compris entre 10° et 40°.

4. Pneu (100) selon l'une quelconque des revendications précédentes, dans lequel le nombre desdits fils métalliques (13) est compris entre deux et huit.

5. Pneu (100) selon l'une quelconque des revendications précédentes, dans lequel le nombre desdits fils métalliques (13) est égal à cinq.

6. Pneu (100) selon l'une quelconque des revendications précédentes, dans lequel le diamètre desdits fils métalliques (13) est compris entre environ 0, 12 mm et environ 0,35 mm.

7. Pneu (100) selon l'une quelconque des revendications précédentes, dans lequel lesdits fils métalliques (13) sont dans un état de contact essentiellement mutuel.

8. Pneu (100) selon l'une quelconque des revendications précédentes, dans lequel ledit au moins un câblé de renforcement (11) présente un diamètre compris entre environ 0,5 mm et environ 2,5 mm.

9. Pneu (100) selon l'une quelconque des revendications précédentes, dans lequel ledit pas d'enroulement est compris entre environ 3 mm et environ 16 mm.

10. Pneu (100) selon l'une quelconque des revendications précédentes, dans lequel ledit au moins un câblé de renforcement (11) présente un allongement à la rupture supérieur à 2,5%.

11. Pneu (100) selon l'une quelconque des revendications précédentes, dans lequel ledit au moins un câblé de renforcement (11) présente un allongement sous charge partielle supérieur à 0,5%.

12. Pneu (100) selon l'une quelconque des revendications précédentes, dans lequel ledit noyau (12) comprend un matériau fibreux.

13. Pneu (100) selon la revendication 12, dans lequel ledit matériau fibreux comprend un matériau inorganique choisi parmi des fibres de verre et/ou de carbone et/ou de basalte et/ou de bore.

14. Pneu (100) selon la revendication 12, dans lequel ledit matériau fibreux comprend un matériau organique choisi parmi : le polyéthylène téréphtalate, le polyamide, le polyamide aromatique, l'ester polyvinylique, l'alcool polyvinylique, le polyéthylène naphtalate, une polycétone, des fils provenant de cellulose régénérée, le coton et des hybrides ou des mélanges de ceux-ci.
